# EUROPÄISCHE PATENTANMELDUNG

(11) **EP 2 626 272 A1**
(43) Veröffentlichungstag der Anmeldung: **14.08.2013**
(21) Anmeldenummer: 12154252.6
(22) Anmeldetag: 07.02.2012
(51) Int. Cl.: B61D 37/00, F16B 9/02, F16B 7/04

(54) **Befestigungsvorrichtung mit Steckelement für eine Gepäckablage, sowie Gepäckablage für einen Schienenfahrzeugwagen**

(71) Anmelder: Bombardier Transportation GmbH, 10785 Berlin (DE)
(72) Erfinder: Westhäuser, Gottfried, 16567 Mühlenbeck (DE)
(74) Vertreter: Zimmermann & Partner

(57) **Zusammenfassung**

Es wird eine Befestigungsvorrichtung vorgeschlagen, die mindestens zwei zu verbindende Bauteile (20) und mindestens ein federndes Steckelement (10) umfasst. Die Bauteile (20) weisen an jeweils mindestens einer ihrer Stirnseiten (21) eine Aufnahme (22) zur teilweisen Auf nahme des Steckelements (10) auf, welches in die jeweilige Aufnahme (22) eines Bauteils (20) einführbar ist und dort mittels elastischer Selbstspreizung eine Klemmverbindung herbeiführt. Die Bauteile (20) werden durch das Steckelement (10) voneinander in Längsrichtung beabstandet oder abstandsfrei gehalten. Zusätzlich kann eine Haltevorrichtung (30) vorgesehen sein, die das Steckelement (10) an seiner Außenseite im Bereich zwischen den beiden voneinander beabstandeten Bauteile (20) umgibt.

## Beschreibung

### Technisches Gebiet

Die Erfindung betrifft eine Befestigungsvorrichtung, die insbesondere für Gepäckablagen eines Schienenfahrzeugwagens geeignet ist. Weiterhin betrifft die Erfindung ein Steckelement, das zum Längsverbinden von Bauteilen, insbesondere von Längs- oder Hohlprofilen, verwendet wird. Weiterhin betrifft die Erfindung eine Gepäckablage für einen Schienenfahrzeugwagen.

### Vorbekannter Stand der Technik

Schienenfahrzeuge für den Personentransport weisen Ablagen für das Gepäck auf. Diese werden typischerweise oberhalb der Sitze längs des Schienenfahrzeugs angepracht. Da die Fahrgäste das Gepäck "über Kopf" ablegen und von den Ablagen oftmals wieder herunterziehen, müssen die Gepäckablagen entsprechend stabil ausgeführt werden. Außerdem muss berücksichtigt werden, dass Gepäckablagen durch Fahrgäste auch zweckentfremdet benutzt werden, beispielsweise, indem sie sich daran hochziehen.

Aus EP 2 055 610 A2 ist eine Gepäckablage mit einem Rahmenaufbau, der eine innen liegende Auflageplatte trägt, bekannt. Der Rahmenaufbau ist als Verbundsystem ausgelegt und weist Haltemodule mit starren Zapfen auf, welche in Aufnahmen von Ablagemodulen eingeführt und dort verschraubt werden. Die Montage dieser Gepäckablage ist mit vergleichsweise hohem Aufwand verbunden. Außerdem muss bei einer eventuellen Beschädigung die gesamte Gepäckablage demontiert werden.

Zur Befestigung von Strukturelementen untereinander sind auch andere Vorschläge unterbreitet worden. So beschreibt die DE 202 09 739 U1 ein massives Verbindungselement in der zylindrischen Form einer liegenden Acht. Dieses Verbindungselement kann in entsprechend ausgebildete Vertiefungen von zwei Bauteilen, insbesondere benachbarten Teilen eines Möbelstücks, eingelegt werden und dient dadurch der relativen Ausrichtung der Teile zueinander.

Eine andere Möglichkeit schlägt DE 29 34 795 B2 vor. Diese beschreibt eine verdrehsichere Befestigungsmöglichkeit für ein rohrförmiges Bauteil durch Verwendung eines in das rohrförmige Bauteil einzusetzenden Keilelements, in das eine Schraube axial eingedreht und dadurch das Keilelement im rohrförmigen Bauteil verklemmt.

Ein Verbindungsaufbau, der über zwei komplementär aufgebaute Passflächen mit eingelegtem Sperrriegel verfügt, ist in der WO 2004/018883 A1 beschrieben.

CA 962231 beschreibt einen Verbindungsaufbau für ein rohrförmiges Bauteil, dessen Querschnitt an seinem Verbindungsende in einen flachen Querschnitt übergeht, um dadurch eine verdrehsichere Befestigung des rohrförmigen Bauteils zu ermöglichen.

### Nachteile des Standes der Technik

Die obigen Lösungen sind nur bedingt für Gepäckablagen in einem Schienenfahrzeugwagen geeignet. Zum einen gewährleisten die obigen Lösungen keine ausreichende Stabilität oder lassen sich nur mit Aufwand herstellen.

### Problemstellung

Es ist daher Aufgabe der vorliegenden Erfindung, einen einfach herzustellenden und sicheren Verbindungsaufbau vorzuschlagen, der eine ausreichende Stabilität aufweist.

### Erfindungsgemäße Lösung

Diese Aufgabe wird gelöst durch eine Befestigungsvorrichtung nach Anspruch 1. Weiterhin wird diese Aufgabe gelöst durch eine Gepäckablage nach Anspruch 12 sowie einen Schienenfahrzeugwagen nach Anspruch 14. Weiterhin wird diese Aufgabe durch ein Steckelement nach Anspruch 15 gelöst. Weitere Ausführungsformen, Modifikationen und Verbesserungen ergeben sich anhand der folgenden Beschreibung und der beigefügten Ansprüche.

Gemäß einer Ausführungsform wird eine Befestigungsvorrichtung vorgeschlagen, die mindestens zwei in Längsrichtung zu verbindende Bauteile und mindestens ein, insbesondere separates, federndes Steckelement umfasst, wobei die Bauteile an jeweils mindestens einer ihrer Stirnseiten eine Aufnahme zur teilweisen Aufnahme des Steckelements aufweisen, welches in die jeweilige Aufnahme eines Bauteils einführbar ist und dort mittels elastischer Selbstspreizung eine Klemmverbindung herbeiführt. Die Bauteile werden durch das Steckelement voneinander in Längsrichtung beabstandet oder abstandsfrei gehalten.

Gemäß einer Ausführungsform wird eine Befestigungsvorrichtung vorgeschlagen, die mindestens zwei zu verbindende Bauteile, insbesondere Längsprofile, mindestens ein federndes Steckelement und eine Haltevorrichtung zum Halten des Steckelements umfasst. Die Bauteile weisen an jeweils mindestens einer ihrer Stirnseiten eine Aufnahme zur teilweisen Aufnahme des Steckelements auf, welches in die jeweilige Aufnahme eines Bauteils einführbar ist und dort mittels elastischer Selbstspreizung eine Klemmverbindung herbeiführt. Die Bauteile werden durch das Steckelement, vorzugsweise voneinander beabstandet, oder abstandsfrei, in Längsrichtung gehalten. Die Haltevorrichtung umgibt und hält das Steckelement an seiner Außenseite im Bereich zwischen den beiden voneinander beabstandeten Bauteilen bevorzugt allein mittels der Klemmwirkung. Zusätzliche Befestigungsmittel sind nicht erforderlich. Dies erleichtert die Montage.

Aufgrund seiner elastischen Eigenschaften kann sich das Steckelement durch Selbstspreizung in den Aufnahmen verklemmen und führt dort zu einer kraftschlüssigen und/oder formschlüssigen Verbindung insbesondere in Längsrichtung der Bauteile. Dadurch wird eine dauerhafte und sichere lösbare Verbindung hergestellt. Durch die Spannfunktion des Steckelements wird auch ein Klappern vermieden, da ein Lockern der Verbindung unterbunden ist. Dies ist nicht nur aus Gründen der Sicherheit sondern auch des Reisekomforts gewünscht.

Das Steckelement gewährleistet andererseits jedoch auch einen gewissen Toleranzausgleich im Hinblick auf die Relativlage in Längsrichtung, was insbesondere im Hinblick auf die Montage von Vorteil ist.

Darüber hinaus kann das Steckelement eine fluchtende Anordnung der beiden Bauteile zueinander sicherstellen. Die Spannfunktion des Steckelements führt im Zusammenwirken mit den Aufnahmen der beiden Bauteile zu einer Selbstausrichtung der beiden Bauteile.

Das Steckelement kann weiterhin auch einen zu den Innenquerschnitten der Aufnahmen komplementären Außenquerschnitt aufweisen. Damit kann zum einen ein flächiger und damit formschlüssiger Kontakt und zusätzlich ein Kraftschluss hergestellt werden. Zum anderen wird dadurch auch die Selbstausrichtung der Bauteile verbessert.

Bevorzugt ist das Steckelement an die Querschnittsgeometrie der Bauteile insoweit angepasst, dass das Steckelement in den Bauteilen untergebracht und im verbauten Zustand nicht von außen sichtbar ist.

Bei den Bauteilen kann es sich gemäß einer Ausführungsform um Längsprofile und insbesondere um Hohlprofile handeln.

Gemäß einer Ausführungsform weist das Steckelement zwei nebeneinander angeordnete und miteinander verbundene längliche Kopplungselemente auf, die eine torsionsfeste Verbindung der beiden Bauteile untereinander und ggf. bezüglich der Haltevorrichtung ermöglichen.

Die Bauteile werden somit an zwei Punkten, gebildet durch die Kopplungselemente, miteinander verbunden. Dies allein führt bereits zu einer torsionsstabilen Verbindung. Die Torsionsstabilität wird weiterhin noch dadurch verbessert, dass das Steckelement zwei miteinander verbundene Kopplungselemente aufweist, die in die jeweiligen entsprechend ausgeformten Aufnahmen eingeführt werden. Eine Relativbewegung der beiden Kopplungselemente gegeneinander wird dadurch vermieden und so eine verdrehsichere Verbindung hergestellt.

Gemäß einer Ausführungsform werden die beiden Kopplungselemente durch zwei in Längsrichtung geschlitzte Hülsen gebildet, die nebeneinander angeordnet und miteinander verbunden sind. Diese Ausführungsform stellt eine sehr einfache und doch wirkungsvolle Lösung dar. Der Vorteil von längsgeschlitzten Hülsen ist deren hohe Spannkraft bei gleichzeitig gleichmäßig flächigem Kontakt mit entsprechend komplementär aufgebauten Aufnahmen der Bauteile.

Gemäß einer Ausführungsform umfasst das Steckelement ein Verbindungselement, welches die beiden Kopplungselemente miteinander verbindet, wobei das Verbindungselement in Längsrichtung der Kopplungselemente von den jeweiligen stirnseitigen Enden der Kopplungselemente beabstandet ist. Das Verbindungselement stellt nicht nur die weiter oben beschriebene feste und damit torsionssichere Verbindung zwischen den Kopplungselementen her, sondern kann gleichzeitig als Anschlag zur Begrenzung der Einstecktiefe des Steckelements dienen.

Gemäß einer Ausführungsform besteht das Steckelement aus Stahl oder Federstahl. Diese Materialien gewährleisten sehr gute elastische Eigenschaften.

Gemäß einer Ausführungsform umfasst jede Aufnahme der Bauteile zwei zylindrische Vertiefungen, insbesondere rohrförmige Buchsen. Diese können einen an den Außendurchmesser beispielsweise der Hülsen des Steckelements angepassten Innendurchmesser aufweisen. Die Buchsen wie die Hülsen müssen nicht notwendigerweise einen kreisförmigen Querschnitt aufweisen, sondern können auch einen elliptischen Querschnitt haben. Ein kreisförmiger Querschnitt wird jedoch im Sinne eines gleichmäßigen Kraftschlusses bevorzugt.

Gemäß einer Ausführungsform weist jede Aufnahme der Bauteile einen Tiefenanschlag zur Begrenzung der Einstecktiefe des Steckelements auf. Ein derartiger Tiefenanschlag kann beispielsweise durch eine innen liegende Stufe in den Aufnahmen gebildet werden. Eine solche Stufe lässt sich beispielsweise durch eine erweiternde Bohrung bis zu einer gewissen Tiefe eines an sich kreisförmigen Hohlprofils, das als Aufnahme verwendet wird, herstellen. Der Tiefenanschlag kann so kurz gewählt sein, dass die Bauteile durch das sie verbindende Steckelement beabstandet bleiben.

Gemäß einer Ausführungsform sind die Bauteile Strangpressprofile aus Aluminium oder einer Aluminiumlegierung. Derartige Strangpressprofile lassen sich mit der nötigen Genauigkeit herstellen. Außerdem ist Aluminium vergleichsweise leicht, was unter dem Blickpunkt einer Gewichtseinsparung von Vorteil ist.

Gemäß einer Ausführungsform hat die Haltevorrichtung eine Aufnahme für das Steckelement, aus welcher das Steckelement im eingelegten Zustand zu beiden Seiten hervorsteht, um mit den jeweiligen Aufnahmen der beiden Bauteile in Eingriff zu stehen. Die Haltevorrichtung dient letztendlich der Halterung der Bauteile. Dies erfolgt, indem das Steckelement in der Haltevorrichtung, insbesondere der dafür vorgesehenen Aufnahme, geeignet gelagert wird. Das Steckelement verbindet dann die beiden Bauteile miteinander. In Querrichtung bezüglich der Längsrichtung der Bauteile nimmt somit das Steckelement die auf die Bauteile wirkenden Kräfte auf und leitet diese in die Haltevorrichtung ein.

Der Innenquerschnitt der haltevorrichtungsseitigen Aufnahme für das Steckelement kann an den Außenquerschnitt des Steckelements angepasst sein, um eine gute form-und auch kraftschlüssige Verbindung herzustellen. Typischerweise beeinträchtigt die haltevorrichtungsseitige Aufnahme nicht oder nur im geringen Maße die Selbstspreizung des Steckelements in den bauteilseitigen Aufnahmen. Um dies zu gewährleisten, kann das Innenprofile der haltevorrichtungsseitige Aufnahme eine etwas größere lichte Weite als das Innenprofil der bauteilseitigen Aufnahmen haben. Jedoch ist es bevorzugt, wenn das Steckelement in der haltevorrichtungsseitigen Aufnahme mit einer gewissen Klemmwirkung festliegt.

Gemäß einer Ausführungsform weist die Haltevorrichtung zwei Schenkel auf, zwischen denen das Steckelement festgelegt ist. Die Haltevorrichtung umgreift das Steckelement an seiner Außenseite mit den zwei Schenkeln. Mit dem offenen Ende der Haltevorrichtung kann diese beispielsweise an einem Träger montiert werden. Dies hat den Vorteil, dass durch ein Steckelement bereits miteinander verbundene Bauteile am Träger festgelegt werden, indem die Haltevorrichtung zusammen mit dem Steckelement und den beiden Bauteilen an den Träger angesetzt und dort fixiert werden. Die Haltevorrichtung muss nicht notwendigerweise U-förmig sein, sondern kann auch andere Formen aufweisen. Außerdem kann die Haltevorrichtung über geeignete Befestigungsmittel zum Festlegen am Träger verfügen.

Gemäß einer Ausführungsform umfasst eine Gepäckablage für einen Schienenfahrzeugwagen eine Konsole zur Befestigung am Schienenfahrzeugwagen, mindestens eine Ablageplatte und mindestens eine Befestigungsvorrichtung. Mittels der Befestigungsvorrichtung wird mindestens ein Bauteil an der Konsole befestigt oder festlegt, wobei die Ablageplatte selbst unmittelbar an der Konsole befestigt ist. Gemäß einer Ausführungsform werden unterschiedliche Befestigungsmittel für die Befestigung des Bauteils und der Ablageplatte verwendet.

Gemäß einer Ausführungsform umfasst eine Gepäckablage für einen Schienenfahrzeugwagen mindestens eine Konsole zur Befestigung am Schienenfahrzeugwagen und mindestens eine Befestigungsvorrichtung, wobei die Haltevorrichtung der Befestigungsvorrichtung an einem zum Inneren des Schienenfahrzeugwagens weisenden Ende der Konsole befestigt ist, und die beiden Bauteile den zum Inneren des Schienenfahrzeugwagens weisenden Abschluss der Gepäckablage bilden. Bevorzugt sind die Bauteile Längsprofile.

Gemäß einer Ausführungsform umfasst eine Gepäckablage für einen Schienenfahrzeugwagen mindestens eine Konsole zur Befestigung am Schienenfahrzeugwagen und mindestens eine Befestigungsvorrichtung, wobei die beiden Bauteile den zum Inneren des Schienenfahrzeugwagens weisenden Abschluss der Gepäckablage bilden.

Die Bauteile können beispielsweise nach ästhetischen Gesichtspunkten geeignet ausgestaltet werden, beispielsweise eine sehr glatte Oberfläche aufweisen. Die Bauteile müssen auch eine hohe Belastung aufnehmen, da das Gepäck beim Ablegen häufig schräg auf die Gepäckablage geschoben und auch so wieder herunter genommen wird, d.h. die gesamte Last liegt auf den Bauteile. Dabei werden die Bauteile besonders belastet. Um die dabei auftretenden Kräfte aufzunehmen, können die Bauteile entsprechend dimensioniert sein.

Gemäß einer Ausführungsform besteht die Konsole aus Guss und ist damit besonders stabil.

Gemäß einer Ausführungsform können in Hohlräumen der Bauteile elektrische Leitungen verlegt sein, beispielsweise für in die Gepäckablage integrierte Beleuchtungseinrichtungen.

Gemäß einer Ausführungsform umfasst ein Schienenfahrzeugwagen eine Gepäckablage wie vorstehend beschrieben.

Gemäß einer Ausführungsform wird ein Steckelement zum Verbinden von Bauteilen und insbesondere von Hohlprofilen vorgeschlagen, wobei das Steckelement zwei in Längsrichtung geschlitzte Hülsen umfasst, welche in Querrichtung nebeneinander angeordnet und fest miteinander verbunden sind, so dass es, wenn es in entsprechende Aufnahmen der Bauteile eingesetzt wird, eine torsionsstabile Verbindung zwischen den Bauteilen ermöglicht. Das Steckelement besteht bevorzugt aus Stahl oder Federstahl.

Gemäß einer Ausführungsform wird das Steckelement ohne Haltevorrichtung verwendet und dient lediglich der Verbindung der Bauteile oder auch von anderen Längsprofilen untereinander in deren Längsrichtung. Dies kann beispielsweise dort gewünscht sein, wo lediglich Hohl- oder Längsprofile verlängert werden sollen, ohne dabei zusätzlich gehalten zu werden.

Gemäß einer Ausführungsform kann das Steckelement auch zur Befestigung eines Hohlprofils oder Längsprofils an einem Bauteil oder Träger verwendet werden.

Die vorgeschlagene Gepäckablage ist insbesondere in Schienenfahrzeugwagen mit Fahrgasträumen im Personennah- und Regionalverkehr sowie Personenfern- und Hochgeschwindigkeitsverkehr einsetzbar.

### Figuren

Die beiliegenden Zeichnungen veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu. Gleiche Bezugszeichen bezeichnen entsprechend ähnliche Teile.

Figur 1 zeigt einen Ausschnitt aus einer dreidimensionalen Darstellung einer Befestigungsvorrichtung am Beispiel einer Gepäckablage gemäß einer Ausführungsform.

Figur 2 zeigt ein Steckelement gemäß einer Ausführungsform.

Figur 3 zeigt eine in einem Schienenfahrzeugwagen montierte Gepäckablage.

### Ausführungsbeispiele

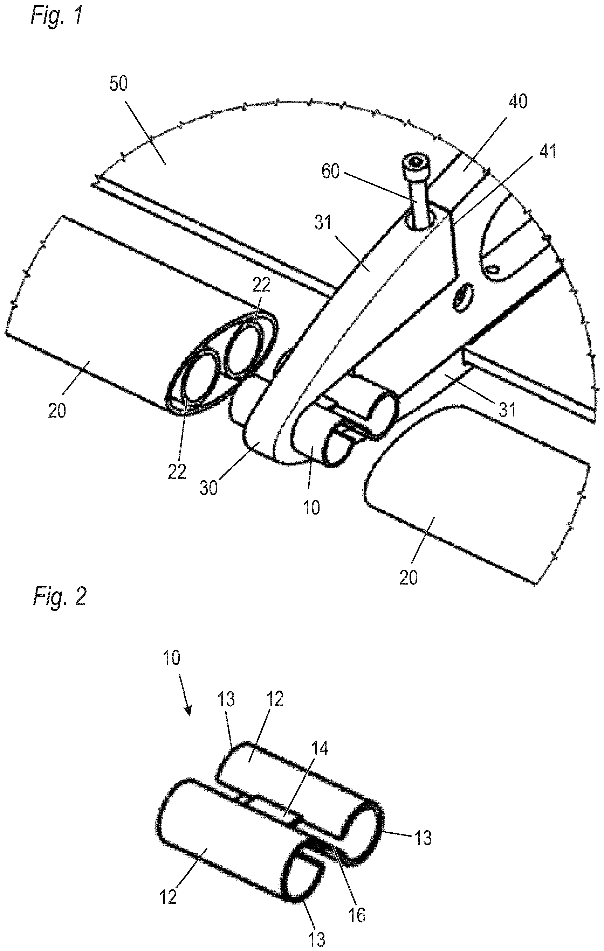

Figur 1 zeigt eine Befestigungsvorrichtung am Beispiel einer Gepäckablage für einen Schienenfahrzeugwagen, die eine Haltevorrichtung 30, Längsprofile 20 und ein Steckelement 10 umfasst. Die Längsprofile 20 sind hier als Strangpresshohlprofile mit innen liegenden Hohlprofilen ausgeführt. Die innen liegenden Hohlprofile weisen in der hier gezeigten Ausführungsform jeweils einen kreisförmigen Querschnitt auf, liegen nebeneinander und dienen, wie nachstehend erläutert, als Aufnahme 22 für das Steckelement 10. Der Außenquerschnitt der Längsprofile 20 ist in der hier gezeigten Ausführungsform elliptisch, kann jedoch auch andere Formen aufweisen. Die Längsprofile 20 stellen hier die zu verbindenden Bauteile dar, ohne darauf beschränkt zu sein.

Das Steckelement 10 kann ein Außenquerschnittsprofil in Form etwa einer Acht aufweisen, wie in Figur 2 erkennbar ist. Dieses Außenquerschnittsprofil kann beispielsweise durch zwei Hülsen 12 erreicht werden, die nebeneinander und parallel zueinander angeordnet sind. Die Hülsen 12 bilden hier die eigentlichen Kopplungselemente des Steckelements. Jede der Hülsen 12 weist einen Längsschlitz 16 auf. In der hier gezeigten Ausführungsform sind die Längsschlitze 16 einander zugewandt. Die Längsschlitze 16 können jedoch an voneinander abgewandten Seiten angeordnet sein oder beispielsweise mit Bezug auf die zeichnerische Darstellung nach unten weisen. Die Weite der Längsschlitze 16 sollte so bemessen sein, dass der Außendurchmesser durch Einwirkung von Radialkräften, beispielsweise mittels einer Zange oder eines anderen Werkzeugs, soweit elastisch verringert werden kann, dass die Hülsen 12 in die Aufnahmen 22 der Längsprofile 20 eingeführt werden können. Dort spreizen sich die Hülsen 12 von selbst wieder auf, wenn die eingebrachten Radialkräfte nicht mehr wirken. Die Hülsen 12 legen sich dann kraftschlüssig an die Innenwand der Aufnahmen 22 an und klemmen sich in den Aufnahmen 22 fest.

Wie in Figur 2 erkennbar, sind die beiden Hülsen 12 mit einem Verbindungsstück 14 miteinander fest oder sogar starr verbunden. Das Verbindungsstück 14 kann wie in der hier gezeigten Ausführungsform als flaches Element ausgebildet sein. Beispielsweise können die Hülsen 12 von einem Rohrmaterial geeigneter Stärke abgeschnitten und dann geschlitzt werden. Es können auch Spannhülsen verwendet werden, die schon geschlitzt sind. Das Verbindungsstück 14 bildet die Querverbindung zwischen den Hülsen 12.

Die Außenkontur des Steckelements 12 kann auch noch stärker einer Acht ähneln, wenn beispielsweise das Verbindungsstück 14 gebogen ist.

Bevorzugt ist das Steckelement 10 einstückig ausgebildet.

Wie weiter in Figur 2 erkennbar, ist das Verbindungselement 14 in Längsrichtung der Hülsen 12 von den jeweiligen stirnseitigen Enden 13 der Hülsen 12 beabstandet. Das Verbindungselement 14 kann dadurch als Anschlag zur Begrenzung der Einstecktiefe des Steckelements 10 dienen.

Die Haltevorrichtung 30 ist in der hier gezeigten Ausführungsform etwa U-förmig und beispielsweise als massives Teil ausgeführt. Die Innenweite der U-Form, insbesondere im Bereich des geschlossenen Endes, ist an den Außendurchmesser der Hülsen 12 angepasst. Grundsätzlich kann die Haltevorrichtung 30 eine der Außenkontur des Steckelements 10 angepasste Aufnahme aufweisen. In der hier gezeigten Ausführungsform wird die Aufnahme durch den Zwischenraum zwischen den Schenkeln 31 der Haltevorrichtung 30 gebildet. Das Steckelement 10 ragt beidseitig aus der Haltevorrichtung 30 zur Wechselwirkung mit den Längsprofilen 20 hervor.

Das mittig in Bezug auf seine Hülsen 12 geschlitzte Steckelement 10 wird beidseitig in zwei Längsprofile 20 gesteckt. Die so gebildete Verbindungsstelle kann von der Haltevorrichtung aufgenommen werden. Es ist jedoch auch möglich, die beiden Längsprofile 20 direkt und ohne zusätzliche Haltevorrichtung miteinander mittels eines Steckelements 10 zu verbinden. Dadurch ergeben sich mehr Freiräume bei der Ausbildung der Gepäckablage. Beispielsweise kann eine von der Haltevorrichtung beabstandete Verbindung, gleichsam "im freien Raum", zwischen den Längsprofilen 20 leichter wieder gelöst werden.

Das Steckelement 10 bewirkt gleichzeitig eine in Längsrichtung gesehen fluchtende Ausrichtung der Längsprofile 20. Dazu tragen unter anderem die federnden Eigenschaften des Steckelements 10 bei. Durch die federnde Aufweitung der Hülsen 12 in den Aufnahmen 22 und dem damit verbunden Form- und Kraftschluss wird sichergestellt, dass die Ausrichtung der Längsprofile 20 dauerhaft stabil ist. Das Steckelement 10 ermöglicht damit auch eine Übertragung oder Einleitung von Kräften. Außerdem wird durch die Spannwirkung des Steckelements eine klapperfreie Verbindung herbeigeführt.

Grundsätzlich ist es möglich, das Steckelement nicht in, sondern auch auf entsprechende Aufnahmen in den Längsprofilen 20 aufzuschieben. Damit wird das Steckelement aufgesteckt und klemmt sich dann federnd an der Außenseite der Aufnahmen fest. Zur Montage ist in diesem Fall ein Werkzeug erforderlich, mit dem das Steckelement aufgeweitet wird, um auf die Aufnahmen geschoben werden zu können. Die Ausgestaltung mit dem einzusteckenden Steckelement 10, wie weiter oben beschrieben, ist jedoch aus Gründen der Montage bevorzugt, da hier eine vergleichsweise einfache Nachjustage der Lage der Längsprofile 20 zueinander möglich ist. Auch bei bereits beidseitig aufgeschobenen Längsprofilen 20 kann das Steckelement 10 durch eine Zange oder ähnliches zusammengedrückt werden. Die Längsprofile 20 lassen sich dann gegeneinander verschieben. Auch lässt sich so die Klemmverbindung einfach wieder lösen, was bei einem durch Außenklemmung auf den Aufnahmen wirkenden Steckelement nur bedingt möglich ist.

Das Steckelement kann an die Geometrie der Längsprofile 20 und der Haltevorrichtung 30 geeignet angepasst sein.

Die Gepäckablage weist eine Konsole 40 auf, an der die Befestigungsvorrichtung festgelegt wird. Dies geschieht mittels der Haltevorrichtung 30, die mit ihrem offenen Ende auf die Konsole 40 aufgeschoben und dort beispielsweise mittels einer Schraubverbindung 60 befestigt wird. Die Gepäckablage umfasst weiterhin Ablagen 50, beispielsweise in Form einer Ablageplatte, die von der Konsole 40 direkt getragen werden. Dazu wird die Ablageplatte 50 direkt an der Konsole 40 über von den Steckelementen 10 verschiedenen Befestigungselementen befestigt. Beispielsweise kann die Ablageplatte 50 in eine entsprechende konsolenseitige Aufnahme eingelegt und dort verschraubt oder verklemmt werden.

Die Haltevorrichtung 20 kann, wie hier gezeigt, als Klemmvorrichtung ausgeführt werden, wobei eine Klemmung in Richtung des offenen Endes der U-Form erfolgen kann. Als Anschlag kann dazu eine Anschlagfläche der Konsole 40 dienen.

Zur Montage der Gepäckablage gibt es mehrere Möglichkeiten. Beispielsweise können die Konsolen 40 mit den eingeschobenen und geklemmten Ablagen 50 am Wagenkasten montiert werden. Das Steckelement 10 wird auf etwa 1/3 der Länge von beiden Seiten in ein Längsprofil 20 gesteckt. Das Längsprofil 20 wird zwischen zwei benachbarten Konsolen 40 positioniert und in Höhe der hervorstehenden Steckelemente zwischen Haltevorrichtung 30 und Konsole 40 geklemmt. Die Haltevorrichtung 30 wird an der Konsole 40 verschraubt. Dann wird ein weiteres Längsprofil 20 auf das hervorstehende Steckelement 10 in Längsrichtung seitlich gegen die Konsole 40 bzw. in Längsrichtung gegen das andere Längsprofil 20 geschoben. Die Montage wird in Fahrzeuglängsrichtung entsprechend analog fortgesetzt.

Bei einer anderen Möglichkeit der Montage werden mehrere Längsprofile 20 mit Hilfe der Steckelemente 10 vormontiert. Dazu wird jedes Steckelement 10 auf ca. 1/3 der Länge in die entsprechenden Aufnahmen 22 jedes Längsprofil 20 gesteckt. Beim Steckvorgang wird die Haltevorrichtung 30 zwischen beiden Längsprofilen 20 gehalten, um den Abstand zwischen ihnen festzulegen. Die Konsolen 40 werden mit den eingeschobenen und geklemmten Auflagen 50 am Wagenkasten vormontiert. Die vormontierte Längsträgerbaugruppe aus miteinander verbundenen Längsprofilen 20 wird auf die Konsolen 40 geschoben und mit Hilfe der Haltevorrichtungen 30 an den Konsolen 40 mit Schraubverbindungen 60 befestigt. Anstelle von Schraubverbindungen können auch andere, insbesondere lösbare Verbindungen verwendet werden.

Bei der Befestigung der Haltevorrichtung 30 können die Schenkel 31 teilweise auf die Konsole 40 oder auf dort vorgesehenen Aufnahmen geschoben werden. Dies ist beispielsweise in Figur 1 erkennbar. Die Schenkel 31 umgreifen die Konsole 40 an ihrer Ober-und Unterseite, so dass die Haltevorrichtung 30 flächig auf der Konsole 40 aufliegt. Eine in der Konsole 40 gebildete Stufe 41 kann gleichzeitig als Anschlag für die Haltevorrichtung 30 dienen. Der in der Figur 1 untere der beiden Schenkel 31 kann weiterhin noch zur Sicherung der Ablagen 50 dienen und diese untergreifen.

Der Abstand der Längsprofile 20 zueinander kann etwa der Breite der Haltevorrichtung 30 entsprechen, sodass die Längsprofile 20 stumpf an der Haltevorrichtung 30 anliegen. Das Steckelement 10 ist dann vollständig verdeckt.

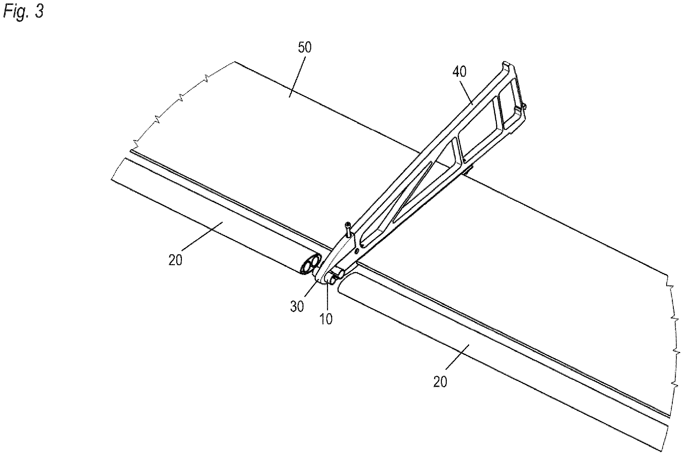

Figur 3 zeigt eine größere Darstellung einer Gepäckablage im teilmontierten Zustand. Erkennbar ist, dass die Gepäckablage durchgehend gestaltet ist in dem Sinne, dass eine Konsole 40 zwei benachbarte Ablagen 50 sowie eine Haltevorrichtung 30 mit zwei benachbarten Längsprofile 20 trägt. Zum Wageninneren wird die Gepäckablage durch die Längsprofile 20 abgeschlossen. Die Oberkante der Längsprofile 20 kann über die Ebene der Ablagen 50 hinausragen und damit Gepäckstücke gegen ein Herausrutschen sichern.

Die aus beispielsweise einem Gussmaterial bestehende Konsole 40 weist, wie in Figur 3 erkennbar, Verstrebungen zur Verstärkung auf.

Durch die Doppelfixierung mittels der Hülsen 12 des Steckelements 10 wird eine verdrehsichere Verbindung der Längsprofile 20 erreicht. Betrachtet man die konkrete Ausgestaltung der Längsprofile 20 wird ersichtlich, dass die Längsprofile 20 auf Torsion belastet werden, wenn beispielsweise Gepäckstücke auf den Rand der Längsprofile 20 aufgelegt oder aufgekippt werden, oder beim Herunternehmen über die Außenkante gezogen werden. Die Form des Steckelements 10, insbesondere durch Vorsehen zweier versetzt zueinander angeordneter Kopplungselemente, die hier in Form von Hülsen 12 ausgebildet sind, sperrt die Verdrehung. Das Steckelement 10 kann dazu zwar einen symmetrischen, beispielsweise spiegelsymmetrischen oder zweifach rotationssymmetrischen Querschnitt, bevorzugt jedoch keinen kreisrotationssymmetrischen Querschnitt aufweisen. Da die Drehachse bei dieser Verbindung etwa zwischen den Kopplungselementen verläuft, werden die Kopplungselemente auf Scherung beansprucht und müssen daher entsprechend ausgelegt werden.

Grundsätzlich ist es auch möglich, das Steckelement 10 zum Verbinden von anderen Bauteilen zu verwenden, oder ein Bauteil an einer Halterung oder dergleichen zu befestigen. Das Steckelement zeichnet sich dabei durch seine einfache Handhabung bei gleichzeitig sicherer kraft- und/oder formschlüssiger Verbindung aus.

Der in den Längsprofilen 20 vorhandene Hohlraum kann zur Leitungsverlegung genutzt werden, so dass die Längsprofile 20 eine Installationsfunktion übernehmen.

Wenngleich hierin spezifische Ausführungsformen dargestellt und beschrieben worden sind, liegt es im Rahmen der vorliegenden Erfindung, die gezeigten Ausführungsformen geeignet zu modifizieren, ohne vom Schutzbereich der vorliegenden Erfindung abzuweichen.

### Bezugszeichenliste

- 10: Steckelement
- 12: Hülse / Kopplungselement
- 13: stirnseitiges Ende des Kopplungselements
- 14: Verbindungselement
- 16: Längsschlitz
- 20: Längsprofil / Hohlprofil
- 22: Aufnahme
- 30: Haltevorrichtung
- 31: Schenkel
- 40: Konsole
- 41: Stufe
- 50: Ablage
- 60: Schraubverbindung

## Patentansprüche

1. Befestigungsvorrichtung, umfassend mindestens zwei in Längsrichtung zu verbindende Bauteile (20) und mindestens ein, insbesondere separates, Steckelement (10), **dadurch gekennzeichnet, dass**
das Steckelement (10) ein federndes Steckelement (10) ist,
die Bauteile (20) an jeweils mindestens einer ihrer Stirnseiten (21) eine Aufnahme (22) zur teilweisen Aufnahme des Steckelements (10) aufweisen, welches in die jeweilige Aufnahme (22) eines Bauteils (20) einführbar ist und dort mittels elastischer Selbstspreizung eine Klemmverbindung herbeiführt, und
die Bauteile (20) durch das Steckelement (10) voneinander beabstandet oder abstandsfrei gehalten werden.

2. Befestigungsvorrichtung nach Anspruch 1, **dadurch gekennzeichnet, dass** das Steckelement (10) zwei nebeneinander angeordnete und miteinander verbundene längliche Kopplungselemente (12) aufweist, die eine torsionsfeste Verbindung der beiden Bauteile (20) untereinander ermöglichen.

3. Befestigungsvorrichtung nach Anspruch 2, **dadurch gekennzeichnet, dass** die beiden Kopplungselemente durch zwei in Längsrichtung geschlitzte Hülsen (12) gebildet werden, die nebeneinander angeordnet und miteinander verbunden sind.

4. Befestigungsvorrichtung nach Anspruch 2 oder 3, **dadurch gekennzeichnet, dass** das Steckelement (10) ein Verbindungselement (14) umfasst, welches die beiden Kopplungselemente (12) miteinander verbindet, wobei das Verbindungselement (14) in Längsrichtung der Kopplungselemente (12) von den jeweiligen stirnseitigen Enden (13) der Kopplungselemente (12) beabstandet ist.

5. Befestigungsvorrichtung nach einem der Ansprüche 1 bis 4, **dadurch gekennzeichnet, dass** das Steckelement (10) aus Stahl oder Federstahl besteht.

6. Befestigungsvorrichtung nach einem der Ansprüche 1 bis 5, **dadurch gekennzeichnet, dass** jede Aufnahme (22) der Bauteile (20) zwei zylindrische Vertiefungen, insbesondere rohrförmige Buchsen, umfasst.

7. Befestigungsvorrichtung nach einem der Ansprüche 1 bis 5, **dadurch gekennzeichnet, dass** jede Aufnahme (22) der Bauteile (20) einen Tiefenanschlag zur Begrenzung der Einstecktiefe des Steckelements (10) aufweist, der insbesondere so kurz ist dass die Bauteile voneinander beabstandet bleiben.

8. Befestigungsvorrichtung nach einem der Ansprüche 1 bis 7, **dadurch gekennzeichnet, dass** eine Haltevorrichtung (30) zum Halten des Steckelements (10) vorgesehen ist und dass die Haltevorrichtung (30) das Steckelement (10) an seiner Außenseite im Bereich zwischen den beiden voneinander beabstandeten Längsprofilen (20) umgibt.

9. Befestigungsvorrichtung nach Anspruch 8, **dadurch gekennzeichnet, dass** die zwei nebeneinander angeordneten und miteinander verbundenen länglichen Kopplungselemente (12) des Steckelements (10) eine torsionsfeste Verbindung der beiden Bauteile (20) mit der Haltevorrichtung (30) herbeiführen.

10. Befestigungsvorrichtung nach Anspruch 9, **dadurch gekennzeichnet, dass** die Haltevorrichtung (30) eine Aufnahme für das Steckelement (10) hat, aus welcher das Steckelement (10) im eingelegten Zustand zu beiden Seiten hervorsteht, um mit den jeweiligen Aufnahmen (22) der beiden Längsprofile (20) in Eingriff zu stehen.

11. Befestigungsvorrichtung nach Anspruch 9 oder 10, **dadurch gekennzeichnet, dass** die Haltevorrichtung (30) zwei Schenkel (31) aufweist, zwischen denen das Steckelement (10) festgelegt ist.

12. Gepäckablage für einen Schienenfahrzeugwagen, umfassend mindestens eine Konsole (40) zur Befestigung am Schienenfahrzeugwagen, mindestens eine Ablageplatte (50) und mindestens eine Befestigungsvorrichtung nach einem der Ansprüche 1 bis 11, welche mindestens ein Bauteil an der Konsole festlegt, wobei die Ablageplatte (50) selbst unmittelbar an der Konsole (40) befestigt ist.

13. Gepäckablage nach Anspruch 12, **dadurch gekennzeichnet, dass** die Befestigungsvorrichtung eine Haltevorrichtung (30) zum Halten des Steckelements (10) aufweist, welche das Steckelement (10) an seiner Außenseite im Bereich zwischen den beiden voneinander beabstandeten Längsprofilen (20) umgibt, wobei die Haltevorrichtung (30) an einem zum Inneren des Schienenfahrzeugwagens weisenden Ende der Konsole (40) befestigt ist.

14. Schienenfahrzeugwagen mit einer Gepäckablage nach Anspruch 12 oder 13.

15. Steckelement zum Verbinden von Bauteilen, insbesondere Hohlprofilen, **dadurch gekennzeichnet, dass** das Steckelement (10) zwei in Längsrichtung geschlitzte Hülsen (12) umfasst, welche in Querrichtung nebeneinander angeordnet und fest miteinander verbunden sind, so dass es, wenn es in entsprechende Aufnahmen der Bauteile (20) eingesetzt wird, eine torsionsstabile Verbindung zwischen den Bauteilen ermöglicht.
